# EUROPEAN PATENT APPLICATION

(11) **EP 3 736 461 A1**
(43) Date of publication of application: **11.11.2020**
(21) Application number: 18898527.9
(22) Date of filing: 27.12.2018
(51) Int. Cl.: F16C 33/66, B23B 19/02, B23Q 11/12, F16C 19/06, F16C 33/78, F16N 7/32, F16N 7/38

(54) **BALL BEARING, MAIN SHAFT DEVICE FOR MACHINE TOOL**

(30) Priority: 04.01.2018 JP 2018000200
(71) Applicant: NSK LTD., Shinagawa-Ku Tokyo 141-8560 (JP)
(72) Inventor: KATSUNO Yoshiaki, Fujisawa-shi, Kanagawa 251-8501 (JP); AMANO Ryosuke, Fujisawa-shi, Kanagawa 251-8501 (JP)
(74) Representative: Grünecker Patent- und Rechtsanwälte PartG mbB
(86) International application number: PCT/JP2018/048131
(87) International publication number: WO 2019/135385

(57) **Abstract**

Provided is a ball bearing, wherein an outer race includes a plurality of radial-direction holes that are for supplying a lubricating oil and that pierce, along the radial direction, from the outer-circumferential surface of the outer race to the inner-circumferential surface thereof. When inner-diameter openings of the plurality of radial-direction holes are projected onto the outer circumferential surface of a retainer along an extended line of the center line of the radial-direction holes, at least some of the projected inner-diameter openings will be positioned, in the rotational-shaft direction of the ball bearing, within the region of two circles that respectively join axial-direction ends of pockets in the retainer. From among the plurality of radial-direction holes, when the center line of any one of the radial-direction holes matches the circumferential phase of the center of the ball, and when the inner-diameter openings of the radial-direction holes are projected onto the outer circumferential surface of the retainer along the extended line of the center line of the radial-direction holes, as seen from the radial direction of the ball bearing, the projected inner diameter openings are spaced apart from the ball and the inner-circumferential surface of the pockets, and at least some of the projected inner-diameter openings will overlap the pockets as seen from the axial direction of the ball bearing.

## Description

### Technical Field

The present invention relates to a ball bearing and a spindle device for machine tool, and more particularly to an outer ring oil supply type ball bearing and a spindle device for machine tool.

### Background Art

In recent years, there has been an increasing demand for higher speed spindles for machine tools in order to improve cutting efficiency. Recently, for the spindle, there is also a need for meeting a five-axis machine capable of processing a workpiece having a complicated shape without using a plurality of machine tools for higher production efficiency and without changing the stage. In a five-axis machine, the spindle and table turn, so the axial length of the spindle is required to be shortened in order to save space by shortening the turning radius or to reduce the inertia during turning and to save power by reducing weight.

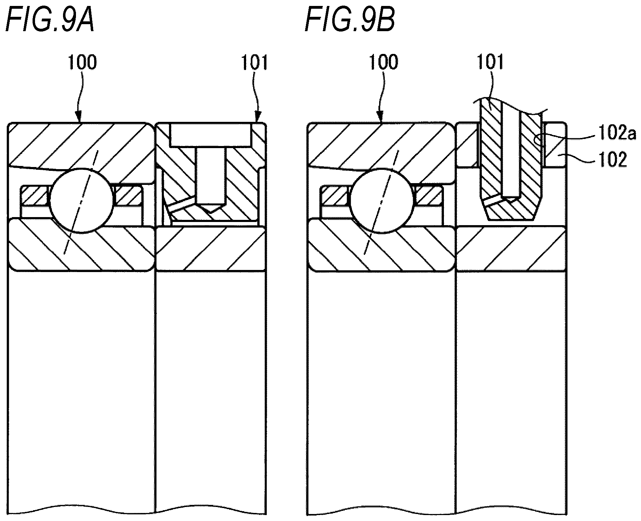

Grease lubrication, oil-air lubrication, oil-mist lubrication, and the like are mentioned as lubrication methods for rolling bearings which are widely used for machine tool spindles. Generally, oil-air lubrication is adopted in a high-speed rotation range (dmn 800,000 or more). For oil-air lubrication of the related art, a method is known in which high-pressure air and fine oil particles are supplied from a side surface of a bearing to an inside of the bearing by using an oil supply nozzle piece 101 arranged on a side of a bearing 100 illustrated in Fig. 9A or an oil supply nozzle piece 101 inserted into a radial through-hole 102a of an outer ring spacer 102 arranged on a side of a bearing 100 illustrated in Fig. 9B.

In the method, additional parts for supplying oil such as the nozzle piece 101 are required, and thus the number of parts of the spindle is increased, which leads to an increase in the cost of the entire spindle and an increase in management labor. Since the nozzle piece 101 is used, the shape of an outer ring spacer and the structure of a housing are complicated, and thus the labor for designing and processing the spindle increases. Since the nozzle piece 101 is installed on a side of the bearing in a direction of a rotation axis, a certain amount of spacer length is required, and thus the axial length of the spindle becomes long. As a result, the size of the machine tool itself becomes larger and the spindle weight becomes heavier due to the increase in the axial length, and the critical speed (the critical speed is a rotation speed calculated from a natural frequency of the spindle, and when the spindle is rotated in the critical speed range, the vibration will be large) of the spindle becomes lower. An air curtain (the air curtain is a wall of a high-speed air flow in a circumferential direction which is generated by the friction between the air and an outer diameter surface of an inner ring that rotates at high speed) generated by the high speed rotation obstructs the supply of oil particles from an oil supply nozzle, and as a result, lubricating oil is not reliably supplied to the inside of the bearing, which may result in seizure. As described above, the oil-air lubrication of the related art has structural and functional problems.

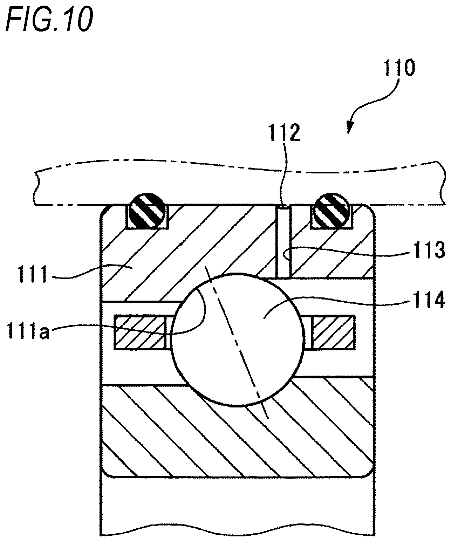

As another oil-air lubrication method, as illustrated in Fig. 10, used is an outer ring oil supply type bearing 110 in which an oil groove 112 is formed in the circumferential direction of the outer peripheral surface of the outer ring 111 and a plurality of radially oriented oil holes 113 are formed at the same axial position as the oil groove 112 (for example, refer to Patent Document 1). In Fig. 10, reference numerals and letters 111a indicate an outer ring raceway groove and reference numerals 114 indicate a ball. In such an outer ring oil supply type bearing, even when the bearing is used at high speed rotation, the supply of oil particles is not obstructed by the air curtain. Therefore, spindle can be stably used even at high speed.

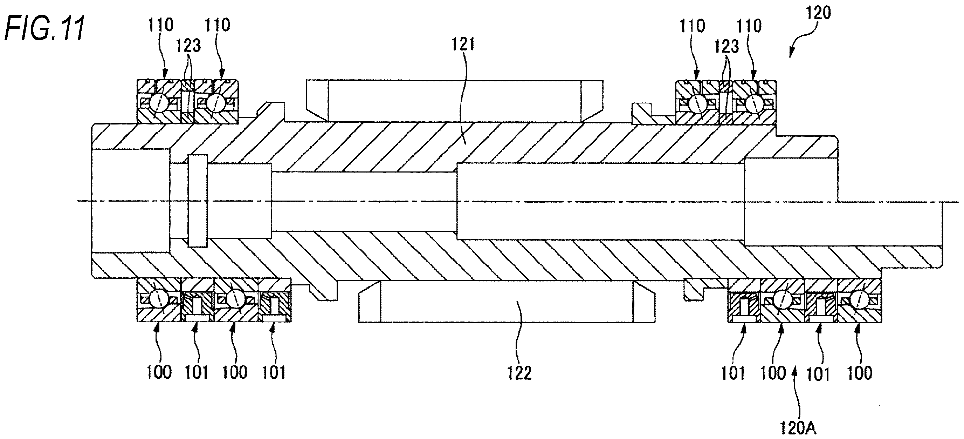

Fig. 11 is a schematic view of a spindle device in the case of oil-air lubrication using the nozzle piece 101 and oil-air lubrication of the outer ring oil supply specification. The upper half in Fig. 11 is an oil-air lubricated spindle 120 of outer ring oil supply specification and the lower half is an oil-air lubricated spindle 120A using the nozzle piece 101. In Fig. 11, reference numerals 121 indicate a rotating shaft and reference numerals 122 indicate a rotor of a motor fitted to a rotating shaft 121. As described above, in the case of oil-air lubrication using the nozzle piece 101, a spacer having a certain axial length or more is required to supply the lubricating oil from the side surface of the bearing 100. On the contrary, in the case of the outer ring oil supply specification, a spacer for supplying oil is not required, so it is possible to reduce the number of nozzle pieces and to simplify the structure of the spacer. Therefore, it is possible to shorten the axial length of the spacer 123 as compared with the specification using the nozzle piece. As a result, the outer ring oil supply specification simplifies the design/machining of parts for spindle/oil-supply and the management of parts and overall cost is reduced in the design/manufacturing/management of machine tools. Shortening the axial length leads to downsizing of machine tools and improvement of the spindle critical speed. As described above, the outer ring oil supply type bearing has many advantages as compared with the side surface oil supply type bearing or the related art.

### Prior Art Document

### Patent Document

Patent Document 1: JP-A-2013-79711

### Summary of Invention

### Technical Problem

A ball bearing for a machine tool spindle is used under various conditions according to the specifications of the spindle. When the number of rotations of the bearing, the initial preload, the magnitude of the external load during processing, and the like differ, the internal state (the contact angle, the size of the contact ellipse and the contact surface pressure between the inner ring groove and the ball or the outer ring groove and the ball) of the bearing used also differs. Therefore, it is desired to improve the lubricity of the bearing in ball bearings used under various conditions. In particular, at the time of high speed rotation, it is desired to keep the lubrication state of the sliding contact portion between the ball and cage good.

The invention is made in view of the problems described above and an object thereof is to provide a ball bearing and a spindle device for machine tool which can realize favorable lubrication performance at high speed rotation and low noise and vibration by properly setting axial and circumferential positions of a plurality of radial holes provided in an outer ring of an outer ring oil supply type bearing.

### Solution to Problem

(1) A ball bearing which includes an inner ring including an inner ring raceway groove on an outer peripheral surface, an outer ring including an outer ring raceway groove on an inner peripheral surface, a plurality of balls rollably arranged between the inner ring raceway groove and the outer ring raceway groove, and a cage including a plurality of pockets respectively holding the plurality of balls, where the outer ring includes a plurality of radial holes penetrating radially from the outer peripheral surface to the inner peripheral surface and supplying lubricating oil and the ball bearing is lubricated by the lubricating oil, where:
   when inner diameter side opening portions of the plurality of radial holes are projected onto an outer peripheral surface of the cage along an extension lines of center lines of the radial holes, at least a part of the projected inner diameter side opening portions is located in a region of two circles connecting axial ends of the pockets of the cage in a rotation axis direction of the ball bearing; and
   when the center line of any one of the plurality of radial holes matches a circumferential phase of a center of the ball, when the inner diameter side opening portion of the other radial hole is projected on the outer peripheral surface of the cage along the extension line of the center line of the radial hole as viewed from a radial direction of the ball bearing, the projected inner diameter side opening portion is separated from the ball and an inner peripheral surface of the pocket, and at least a part of the projected inner diameter side opening portion overlaps with the pocket as viewed in an axial direction of the ball bearing.
(2) The ball bearing according to (1), where
   a concave groove communicating with the radial hole is formed on an outer peripheral surface of the outer ring along a circumferential direction.
(3) The ball bearing according to (2), where
   on the outer peripheral surface of the outer ring, annular grooves are formed along the circumferential direction on both axial sides interposing the concave groove and a seal member having an annular shape is arranged in each of the annular grooves.
(4) The ball bearing according to any one of (1) to (3), where
   a diameter of the radial hole is set to from 0.5 mm to 1.5 mm.
(5) The ball bearing according to any one of (1) to (4), where
   an opening area of the inner diameter side opening portion of the radial hole is wider than that of an outer diameter side opening portion of the radial hole.
(6) A spindle device for machine tool, including:
   the ball bearing according to any one of (1) to (5).

### Advantageous Effects of Invention

According to the ball bearing of the invention, the outer ring includes the plurality of radial holes penetrating radially from the outer peripheral surface to the inner peripheral surface and supplying lubricating oil. When the inner diameter side opening portions of the plurality of radial holes are projected onto the outer peripheral surface of the cage along the extension lines of the center lines of the radial holes, at least a part of the projected inner diameter side opening portions is located in the region of the two circles connecting the axial ends of the pockets of the cage in the rotation axis direction of the ball bearing. When the center line of any one of the plurality of radial holes matches a circumferential phase of a center of the ball, when the inner diameter side opening portion of the other radial hole is projected on the outer peripheral surface of the cage along the extension line of the center line of the radial hole as viewed from a radial direction of the ball bearing, the projected inner diameter side opening portion is separated from the ball and the inner peripheral surface of the pocket and at least a part of the projected inner diameter side opening portion overlaps with the pocket as viewed in the axial direction of the ball bearing. As a result, the lubricating oil is supplied from any one radial hole to the sliding contact portion between the ball and cage and sufficient lubricating oil is supplied to the sliding contact portion between the ball and the cage through the outer peripheral surface of the cage from the other radial hole. Therefore, a favorable lubrication state can be maintained and seizure of the bearing can be prevented. The flow of compressed air is not completely blocked and noise and vibration can be reduced.

### Brief Description of Drawings

Fig. 1 is a cross-sectional view of a ball bearing according to an embodiment of the invention.
Fig. 2 is a cross-sectional view of the ball bearing taken along the line II-II in Fig. 1.
Figs. 3A to 3C are views of balls and a cage viewed from an outer diameter side, where Fig. 3A illustrates a region condition in which inner diameter side opening portions of the other radial holes can be arranged, Fig. 3B illustrates a region condition in which at least a part of the inner diameter side opening portions of the other radial holes can be arranged, and Fig. 3C illustrates a region in which the inner diameter side opening portions of the other radial holes can be arranged considering both the conditions of Figs. 3A and 3B.
Fig. 4A is a cross-sectional view of the ball bearing illustrating an axially outermost position of a radial bore on a counterbore side and Fig. 4B is a cross-sectional view of the ball bearing illustrating an axially outermost position of the radial hole on an anti-counterbore side.
Fig. 5 is a cross-sectional view of the ball bearing according to a first modification example of the embodiment.
Fig. 6 is a cross-sectional view of the ball bearing according to a second modification example of the embodiment.
Fig. 7 is a cross-sectional view of the ball bearing according to a third modification example of the embodiment.
Fig. 8A is a cross-sectional view of the ball bearing according to a fourth modification example of the embodiment and Fig. 8B is a cross-sectional view of the ball bearing according to a fifth modification example of the embodiment.
Figs. 9A and 9B are cross-sectional views illustrating oil-air lubrication using a nozzle piece of the related art.
Fig. 10 is a cross-sectional view of an oil-air lubricated ball bearing having an outer ring lubrication specification.
Fig. 11 is a cross-sectional view of an oil-air lubricated spindle with an outer ring lubrication specification in the upper half and an oil-air lubricated spindle with a nozzle piece in the lower half.

### Description of Embodiment

Hereinafter, a ball bearing and a spindle device for machine tool according to an embodiment of the invention will be described in detail with reference to the drawings.

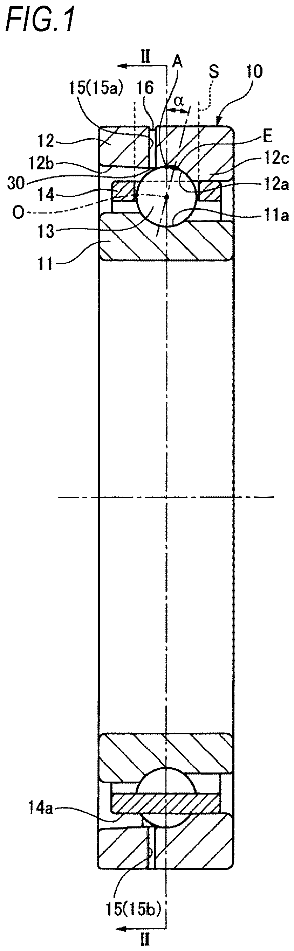

As illustrated in Fig. 1, an angular contact ball bearing 10 according to a first embodiment is applicable to a spindle device for machine tool (see a spindle 120 in Fig. 11) and includes an inner ring 11 having an arc-shaped inner ring raceway groove 11a on an outer peripheral surface, an outer ring 12 including an arc-shaped outer ring raceway groove 12a on an inner peripheral surface, a plurality of balls 13 rotatably arranged between the inner ring raceway groove 11a and the outer ring raceway groove 12a with a predetermined contact angle α, and an outer ring guide type cage 14 including cylindrical pockets P for holding the plurality of balls 13. On the inner peripheral surface on one axial side of the outer ring 12, there is provided a counterbore 12b including an inclined portion of which diameter gradually decreases from an axial end surface to the outer ring raceway groove 12a and a groove shoulder 12c having a uniform inner diameter is formed on an inner peripheral surface on the other side in the axial direction. In the embodiment, an outer peripheral surface 14a of the cage 14 is formed to have a uniform outer diameter in the axial direction.

The angular contact ball bearing 10 is an outer ring lubrication type bearing. The outer ring 12 has a plurality of radial holes 15 (15a, 15b) penetrating radially from its outer peripheral surface to its inner peripheral surface and supplying lubricating oil. A concave groove 16 communicating with a plurality of radial holes 15 is formed on the outer peripheral surface of the outer ring 12 along the circumferential direction. As a result, in the angular ball bearing 10, the oil particles and the lubricating air supplied from the oil supply passage of a housing (not illustrated) are directly supplied to the ball 13 via the concave groove 16 and the radial hole 15 of the outer ring 12, such that oil-air lubrication is performed.

The circumferential concave groove may be formed at the position of the oil supply passage opening communicating with the radial hole 15 on the inner circumferential surface of the housing, instead of being provided on the outer ring 12.

By providing the plurality of radial holes 15 as such, the lubricating oil can be evenly spread over the entire raceway surface, and thus the reliability of lubrication at high speed rotation can be improved.

The outer ring 12 is cooled well in a phase close to the radial hole 15, but is weakly cooled in a phase far from the radial hole 15, so that a temperature difference is caused by the phase of the outer ring 12 and the dimensional accuracy of the bearing is affected. Therefore, by providing a plurality of radial holes 15, it is possible to prevent temperature fluctuations of the outer ring 12 of the bearing.

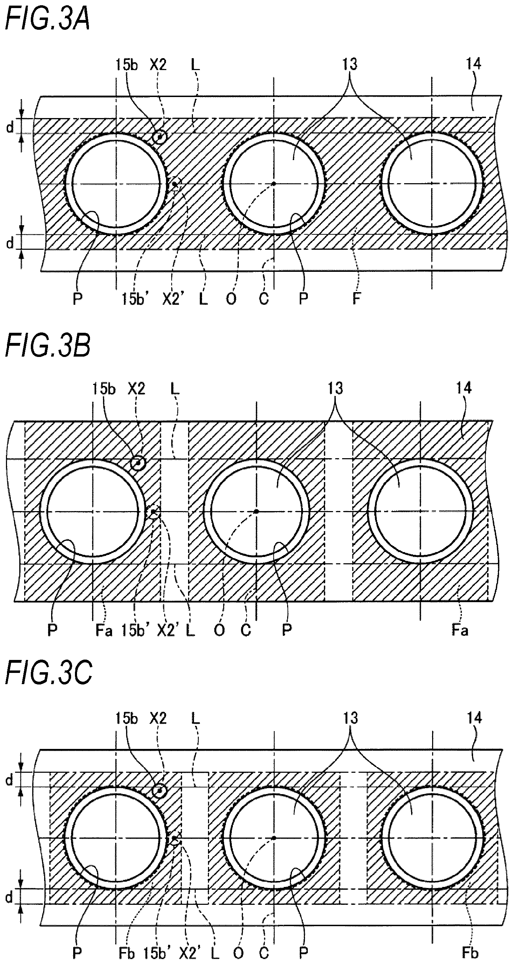

In the embodiment, when inner diameter side opening portions 30 of the plurality of radial holes 15 are projected onto the outer peripheral surface of the cage 14 along extension lines of center lines X1 and X2 of the radial holes 15, at least a part of the projected inner diameter side openings 30 is located in an area (within a dotted line S illustrated in Fig. 1) of two circles L (see Figs. 3A to 3C) connecting the axial ends of the pockets P of the cage 14 in a rotation axis direction of a ball bearing 10.

In general, the sliding contact portion (the inner surface of the pocket P of the cage 14) between the ball 13 and the cage 14 is severely lubricated. In particular, in the bearing for machine tool spindle, the lubricating oil supplied to the bearing is extremely small in order to avoid temperature rise and temperature fluctuation of the bearing. Under such conditions, it is difficult to supply sufficient lubricating oil to the sliding contact portion between the ball 13 and the cage 14, and seizure often occurs due to poor lubrication at the sliding contact portion between the ball 13 and the cage 14.

Therefore, it is desirable that the lubrication oil be supplied in the outer ring lubrication type bearing so that the lubrication state of the sliding contact portion between the ball 13 and the cage 14 is kept favorably. Therefore, when the inner diameter side opening portions 30 of the radial holes 15 are projected onto the outer peripheral surface of the cage 14 along the extension lines of the center lines X1 and X2 of the radial holes 15, by making the projected inner diameter side opening portions 30 be in the area of the two circles L which connect the axial ends of the pockets P of the cage 14 in the rotation axis direction of the ball bearing 10, sufficient lubricating oil is supplied to the sliding contact area between the ball 13 and cage 14. As a result, the lubrication state is kept favorably and seizure of the bearing can be prevented.

If the projected inner diameter side opening portions 30 of the radial holes 15 is outside the area of the two circles described above, in addition to poor lubrication of the sliding contact portion between the ball 13 and the cage 14, vibration and noise increase. Specifically, the pressure of the compressed air acts on a point distant from the center position of the cage 14 in the axial direction, so that a couple of force for tilting the posture of the cage 14 is generated. It is desirable that the cage 14 in the rotating bearing always rotate in the same posture, but the couple of force causes the posture of the cage 14 to change with time, and thus the vibration and noise caused by the movement of the cage 14 increase.

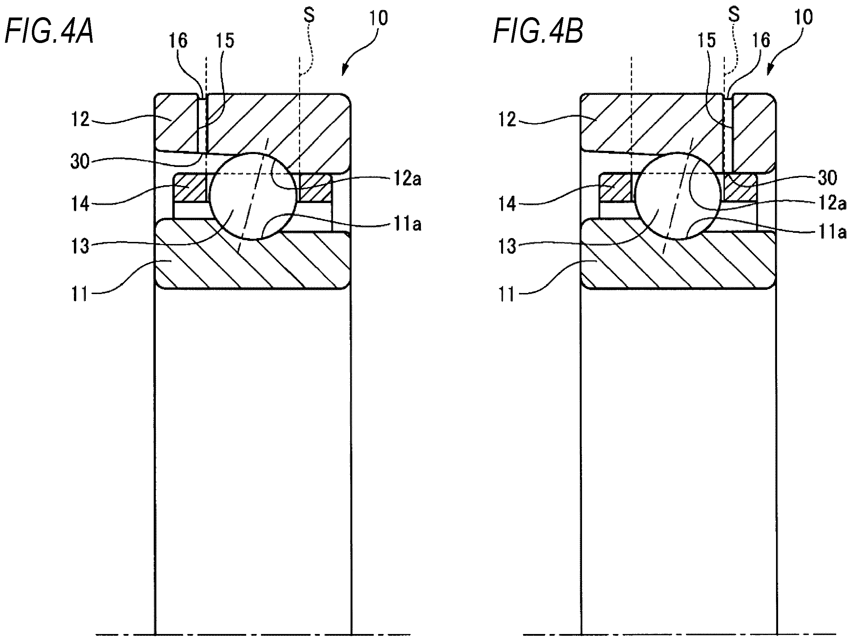

In the embodiment, it suffices that at least a part of the inner diameter side opening portions 30 of the plurality of projected radial holes 15 described above is within the area (inside of the dotted line S in Figs. 4A and 4B) of the two circles L that connect the axial ends of the pockets P of the cage 14 in the rotation axis direction of the ball bearing 10. That is, as illustrated in Fig. 4A, at least a part of the inner diameter side opening portions 30 of the plurality of projected radial holes 15 may overlap with the circle L on the counterbore side that connects the axial ends of the pockets P of the cage 14 in the rotation axis direction of the ball bearing 10. Alternatively, as illustrated in Fig. 4B, at least a part of the inner diameter side opening portions 30 of the plurality of projected radial holes 15 may overlap with the circle L on an anti-counterbore side that connects the axial ends of the pockets P of the cage 14 in the rotation axis direction of the ball bearing 10.

When at least a part of the inner diameter side opening portions 30 of the radial holes 15 is located inside the outer ring raceway groove 12a, it is preferable that it is formed at a contact point between the outer ring raceway groove 12a and the ball 13 or a position not interfering with a contact ellipse E when a preload or an external load is applied to the bearing. By forming the radial hole 15 as described above, stress concentration due to contact between an edge portion of the radial hole 15 and the ball 13 can be prevented and peeling of the ball 13 and the outer ring raceway groove 12a can be prevented. The contact ellipse E is a contact ellipse generated only by an initial preload, and more preferably a contact ellipse generated by a bearing internal load including an external load generated when processing a workpiece.

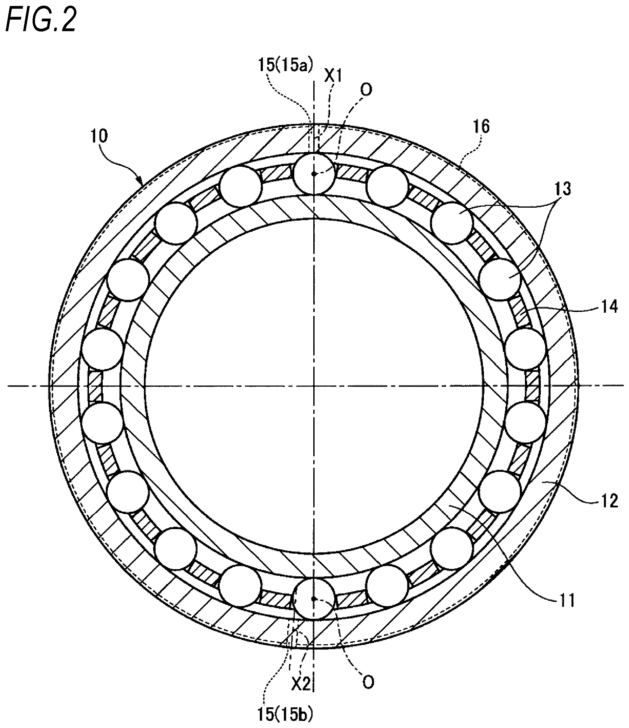

Referring to Figs. 2 and 3A to 3C, a center line X1 of any one of the plurality of radial holes 15a and 15b coincides with the phase of the center O of the ball 13 in the circumferential direction, two conditions, that is, as illustrated in Fig. 3A, (i) in the other radial hole 15b, when seen from the radial direction of the ball bearing 10, when the inner diameter side opening portion 30 of the radial hole 15b is projected onto the outer peripheral surface of the cage 14 along the extension line of the center line X2 of the radial hole 15b, the projected inner diameter side opening portion 30 is separated from the ball 13 and the inner peripheral surface of the pocket P and, as illustrated in Fig. 3B, (ii) at least a part of the projected inner diameter side opening portion 30 overlaps with the pocket P when viewed in the axial direction of the ball bearing 10, are satisfied.

As illustrated in Figs. 3A and 3B, the positions of the other radial hole 15b and the center line X2 the other radial hole 15b may be the positions of 15b'and X2' in Figs. 3A to 3C, respectively.

That is, in the condition (i), the inner diameter side opening portion 30 of the other projected radial hole 15b can be arranged in the region F of Fig. 3A and the center line X2 of the other radial hole 15b is also separated from a line C passing through the center O of the ball 13. d in Figs. 3A and 3C illustrates the hole diameter of the radial hole 15b.

In the outer ring oil supply type, when the radial hole 15 exists in the outer ring raceway groove 12a, the radial hole 15 is physically closed when the ball 13 passes over the radial hole 15 while the bearing is rotating. Vibration and noise occurs. The vibration is an air vibration which occurs when the phenomenon that (1) when the ball 13 passes directly above the radial hole 15, the ball 13 closes the radial hole 15 and the flow of compressed air is interrupted and (2) the flow resumes after the ball 13 passes directly above the radial hole 15 is periodically repeated.

The air vibration tends to increase as the number of balls 13 passing on the radial hole 15 at a time increases and the increase in vibration causes an increase in noise and a reduction in spindle machining accuracy.

Of these, noise is known to be a particularly serious problem. In the range of the rotation speed of 10000 min-1 or higher where outer ring oil supply type bearings are mainly used, the frequency of generated noise is around several thousand Hz. Therefore, since the noise of the frequency band with the highest sensitivity of the human ear is generated, it tends to be a problem.

When the plurality of radial holes 15 are simultaneously closed by the ball 13, the supply amount of the lubricating oil at the moment of passing is remarkably reduced. Then, after the ball 13 passes, the lubricating oil accumulated in the radial holes 15 is supplied all at once. The lubricating oil momentarily becomes over-supplied and the stirring resistance of the lubricating oil increases, and the bearing outer ring is remarkably heated up. As a result, the processing accuracy decreases and the risk of seizure due to abnormal temperature rise increases.

Therefore, it is desirable that the balls 13 do not pass over the plurality of radial holes 15 at the same time while the bearing is rotating. Therefore, when the centerline X1 of any one radial hole 15a matches the phase of the center O of the ball 13 in the circumferential direction, when the inner diameter side opening portion 30 of the other radial hole 15b is projected onto the outer peripheral surface of the cage 14 along the extension lines of the center lines X1 and X2 of the radial holes 15, the projected inner diameter side opening portion 30 is separated from the ball 13 and the inner peripheral surface of the pocket P when viewed from the radial direction of the ball bearing 10. Thus, the center line X2 of the other radial hole 15b is separated from the circumferential phase (line C in Figs. 3A to 3C) of the center O of the ball 13. That is, since, when any one radial hole 15a is closed by the ball 13, the other radial hole 15b is opened, the flow of compressed air is not completely blocked. As a result, noise and vibration can be reduced.

When the outer ring 12 includes three or more radial holes 15, when the center line X1 of any one of the radial holes 15a matches the circumferential phase of the center O of the ball 13, it is more desirable that all of the other projected radial holes 15b described above are located in a region F.

Under the condition (ii), as illustrated in Fig. 3B, at least a part of the inner diameter side opening portion 30 projected onto the outer peripheral surface of the cage 14 along the extension line of the center line X2 of the radial hole 15b is located in the area Fa overlapping the pocket P when viewed in the axial direction of the ball bearing 10. Therefore, in order to satisfy the above-described two conditions (i) and (ii), when viewed from the radial direction of the ball bearing 10, the inner diameter side opening portion 30 of the other projected radial hole 15b is located in an area of Fb illustrated in Fig. 3C when the hole diameter of the illustrated radial hole is adopted. As the hole diameter of the radial hole changes, the illustrated region Fb also changes.

As a result, since the inner diameter side opening portion 30 of the other radial hole 15b is arranged at a position close to the ball 13 and the inner peripheral surface of the pocket P, the lubricating oil supplied from the other radial hole 15 is supplied to the sliding contact portion between the ball 13 and the inner peripheral surface of the pocket P via the outer peripheral surface of the cage 14. As a result, stable lubrication performance can be secured.

In the embodiment, the diameter of the radial hole 15 is set to 0.5 mm to 1.5 mm considering the supply property of the lubricating oil and the prevention of interference with the contact ellipse E. In the embodiment, the radial hole 15 has a uniform diameter in the radial direction.

According to the angular contact ball bearing 10 configured as such, the outer ring 12 has a plurality of radial holes 15 which radially penetrate from the outer peripheral surface to the inner peripheral surface and supply the lubricating oil. When the inner diameter side opening portions 30 of the plurality of radial holes 15 are projected onto the outer peripheral surface of the cage 14 along the extension lines of the center lines X1 and X2 of the radial holes 15, at least a part of the projected inner diameter side opening portions 30 is located in a region of the two circles L which connect the axial ends of the pockets P of the cage 14 in the rotation axis direction of the ball bearing 10. When the center line X1 of any one of the radial holes 15a among the plurality of radial holes 15 coincides with the phase of the center O of the ball 13 in the circumferential direction, when viewed from the radial direction of the ball bearing 10, if the opening portion 30 of the other radial hole 15b is projected onto the outer peripheral surface of the cage 14 along the extension line of the center line X2 of the radial hole 15b, the projected inner diameter side opening portion 30 is separated from the ball 13 and the inner peripheral surface of the pocket P and at least a part of the projected inner diameter side opening portion 30 overlaps with the pocket P when viewed from the axial direction of the ball bearing 10. As a result, the lubricating oil is supplied from any one radial hole 15a to the sliding contact portion between the ball 13 and the cage 14 and sufficient lubricating oil is supplied from the other radial hole 15b to the sliding contact portion between the ball 13 and the cage 14 via the outer peripheral surface of the cage 14. Therefore, a favorable lubrication state can be maintained and seizure of the bearing can be prevented. The flow of compressed air is not completely blocked and noise and vibration can be reduced.

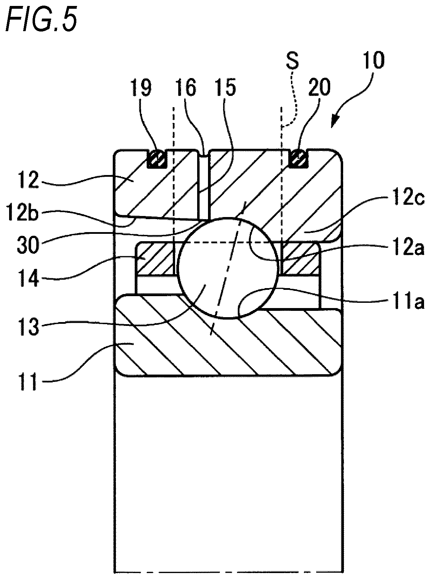

In the embodiment, as similar to a first modification example illustrated in Fig. 5, by forming annular grooves 19 along the circumferential direction on both sides in the axial direction interposing the concave groove 16 in the outer peripheral surface of the outer ring 12 and disposing seal members 20, which are annular elastic members such as O-rings, in respective annular grooves 19, the oil leakage may be prevented.

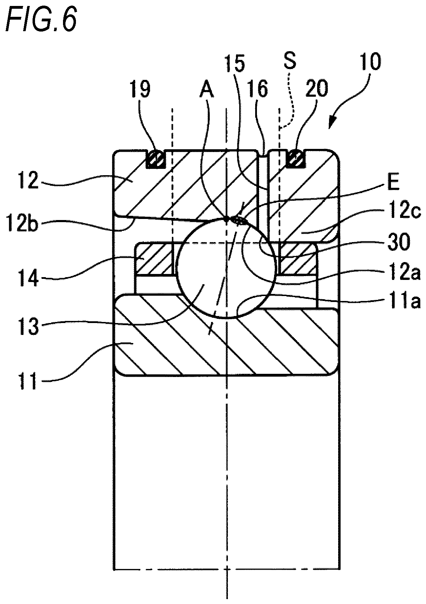

In the embodiment, the projected inner diameter side opening portion 30 of the radial hole 15 may be within the range illustrated by the region S in Fig. 1. In Fig. 1, it is formed on the counterbore side with respect to a groove bottom A of the outer ring raceway groove 12a. However, as in a second modification example illustrated in Fig. 6, it may be formed on the anti-counterbore side with respect to the groove bottom A of the outer ring raceway groove 12a.

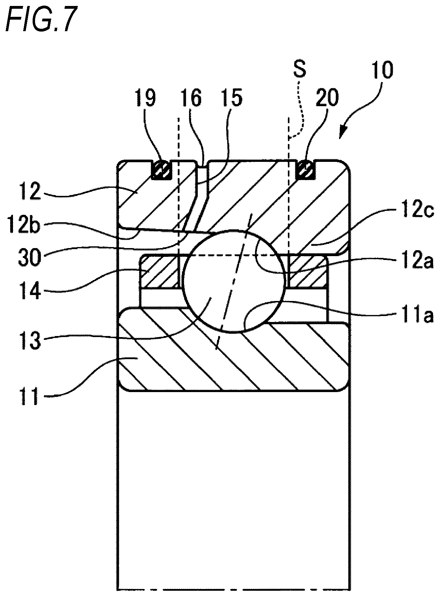

The radial hole 15 may be any hole as long as it penetrates radially from the outer peripheral surface of the outer ring to the inner peripheral surface. Except the one formed along the radial direction (parallel to the radial cross section) of the embodiment, the radial hole 15 may be inclined in the rotation axis direction or the circumferential direction of the bearing. For example, as in a third modification example illustrated in Fig. 7, the radial hole 15 may be formed to bend in the axial direction in the middle of the radial direction of the bearing.

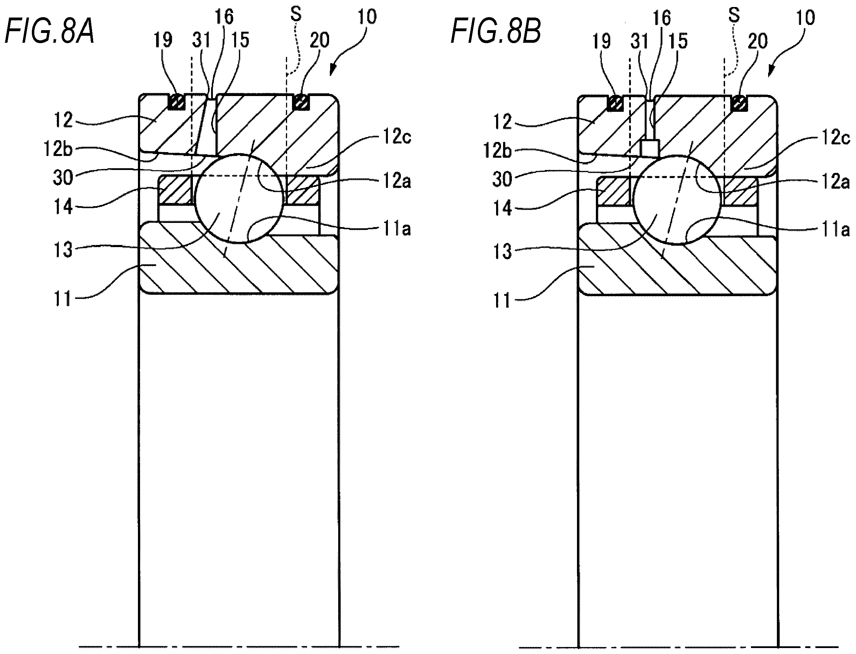

As in fourth and fifth modified examples shown in Figs. 8A and 8B, in the radial hole 15, the radial hole 15 may be formed such that the opening area of the inner diameter side opening portion 30 is set to be larger than the opening area of an outer diameter side opening portion 31. In the fourth modification example, the radial hole 15 is enlarged in a diameter such that the area gradually increases from the outer diameter side opening portion 31 to the inner diameter side opening portion 30. In the fifth modification example, the radial hole 15 has a stepped shape so that the opening area of the inner diameter side opening portion 30 is set to be larger than the opening area of the outer diameter side opening portion 31. That is, in the outer ring oil supply type rolling bearing, the lubricating oil is directly supplied to the ball 13 through the radial hole 15. Therefore, even when the supply air pressure is reduced near the inner diameter side opening portion 30, the lubricating oil can be supplied to the ball 13. Therefore, the air pressure in the inner diameter side opening portion 30 can be reduced to prevent the high pressure air from hitting the ball 13 and noise during rotation of the bearing can be reduced.

In the second to fifth modification examples illustrated in Figs. 6, 7, 8A, and 8B, the seal member 20 is arranged on the outer peripheral surface of the outer ring 12. However, as in Fig. 1, the structure without the seal member may be used.

The invention is not limited to the above-described embodiments and modifications, improvements, or the likes can be appropriately made.

As a method of replenishing the radial hole of the outer ring with lubricating oil, oil mist lubrication may be adopted instead of oil-air lubrication. Oil-jet lubrication is also possible in some cases. However, in the case of the grease replenishment method in which grease is replenished from the radial hole 15 of the outer ring 12 by using a lubricant replenishing device around the bearing or outside the spindle, if the radial hole 15 is formed to open in the outer ring raceway groove 12a, the semi-solid grease containing the thickener is supplied into the outer ring raceway groove 12a.

Here, since the grease is caught in the outer ring raceway groove 12a, problems such as an increase in torque and abnormal heat generation occur due to stirring resistance. In particular, such problems are likely to occur in high speed rotation as in the embodiment. Therefore, an oil lubrication method of supplying a thickener-free lubricating oil is desirable in the invention.

The ball bearing of the invention is not limited to the one applied to a spindle device for machine tool, but can be applied as a ball bearing for a general industrial machine or a device which rotates at high speed such as a motor.

The application is based on Japanese Patent Application No. 2018-000200 filed on January 4, 2018, the content of which is incorporated herein by reference.

### Reference Signs List

- 10:: angular contact ball bearing (ball bearing)
- 11:: inner ring
- 11a:: inner ring raceway groove
- 12:: outer ring
- 12a:: outer ring raceway groove
- 12b:: counterbore
- 12c:: groove shoulder
- 13:: ball
- 14:: cage
- 15, 15a, 15b:: radial hole
- 16:: concave groove
- 19:: annular groove
- 20:: seal member
- 30:: inner diameter side opening portion
- E:: contact ellipse

## Claims

1. A ball bearing comprising: an inner ring including an inner ring raceway groove on an outer peripheral surface; an outer ring including an outer ring raceway groove on an inner peripheral surface; a plurality of balls rollably arranged between the inner ring raceway groove and the outer ring raceway groove; and a cage including a plurality of pockets respectively holding the plurality of balls, wherein: the outer ring includes a plurality of radial holes penetrating radially from the outer peripheral surface to the inner peripheral surface and supplying lubricating oil; and the ball bearing is lubricated by the lubricating oil, **characterized in that**:
when inner diameter side opening portions of the plurality of radial holes are projected onto an outer peripheral surface of the cage along an extension lines of center lines of the radial holes, at least a part of the projected inner diameter side opening portions is located in a region of two circles connecting axial ends of the pockets of the cage in a rotation axis direction of the ball bearing; and
when the center line of any one of the plurality of radial holes matches a circumferential phase of a center of the ball, when the inner diameter side opening portion of the other radial hole is projected on the outer peripheral surface of the cage along the extension line of the center line of the radial hole as viewed from a radial direction of the ball bearing, the projected inner diameter side opening portion is separated from the ball and an inner peripheral surface of the pocket, and at least a part of the projected inner diameter side opening portion overlaps with the pocket as viewed in an axial direction of the ball bearing.

2. The ball bearing according to claim 1, wherein
a concave groove communicating with the radial hole is formed on an outer peripheral surface of the outer ring along a circumferential direction.

3. The ball bearing according to claim 2, wherein
on the outer peripheral surface of the outer ring, annular grooves are formed along the circumferential direction on both axial sides interposing the concave groove and a seal member having an annular shape is arranged in each of the annular grooves.

4. The ball bearing according to any one of claims 1 to 3, wherein
a diameter of the radial hole is set to from 0.5 mm to 1.5 mm.

5. The ball bearing according to any one of claims 1 to 4, wherein
an opening area of the inner diameter side opening portion of the radial hole is wider than that of an outer diameter side opening portion of the radial hole.

6. A spindle device for machine tool comprising:
the ball bearing according to any one of claims 1 to 5.
